# EUROPEAN PATENT APPLICATION

(11) **EP 1 184 577 A1**
(43) Date of publication of application: **06.03.2002**
(21) Application number: 00307538.9
(22) Date of filing: 01.09.2000
(51) Int. Cl.: F16B 5/02, F16B 25/10

(54) **Screw fastener with externally threaded anchoring ring**

(71) Applicant: Pro-Visa Int'l Corp., Kaohsiung Hsien (TW)
(72) Inventor: Tsai, Feng-Yen, Kang-Shan Chen, Kaohsiung Hsien (TW)
(74) Representative: Charlton, Peter John

(57) **Abstract**

A screw fastener (2, 3) includes a screw body (21) having an externally threaded shank portion (212) , and a head portion (211) on one end of the shank portion (212), and an anchoring ring (22, 32) coupled rotatably to the shank portion (212), and formed with a socket hole (221) that receives the head portion (211) of the screw body (21) therein. The anchoring ring (22, 32) includes an externally threaded upper section (222, 322), and a tapered lower section (224, 324) with an outer diameter that is gradually reduced in a direction away from the upper section (222, 322).

## Description

The invention relates to a screw fastener, more particularly to a screw fastener with an externally threaded anchoring ring.

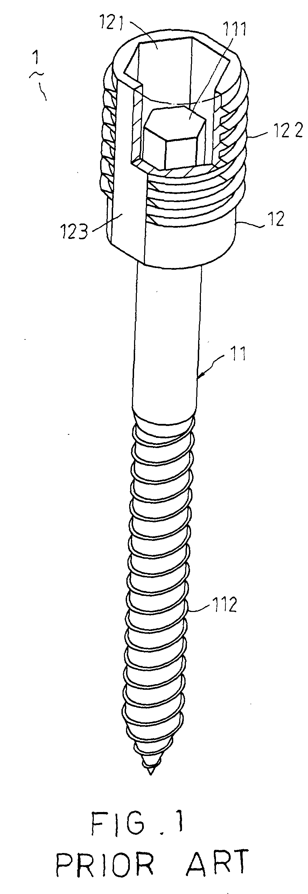

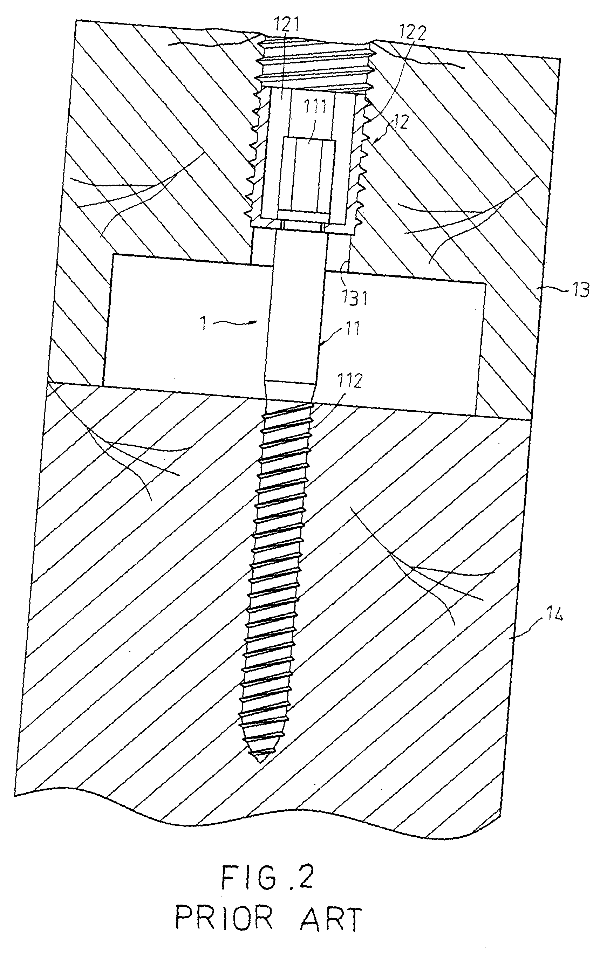

Referring to Figures 1 and 2, a conventional screw fastener 1 is shown to include a screw body 11 and an anchoring ring 12. The screw body 11 has an externally threaded shank portion 112, and a head portion 111 on one end of the shank portion 112. The head portion 111 has a polygonal cross-section. The anchoring ring 12 is coupled rotatably to the shank portion 112, and is formed with a socket hole 121 that has a polygonal cross-section and that receives the head portion 111 of the screw body 11 therein. The anchoring ring 12 has an outer wall surface formed with an external screw thread 122, and a pair of diametrically opposite flutes 123 (only one is visible in Figure 1) that interrupt the screw thread 122.

As shown in Figure 2, the screw fastener 1 is adapted to fasten together first and second articles 13, 14 (such as wood members) . In use, a through hole 131 having a diameter smaller than the outer diameter of the anchoring ring 12 is initially drilled through the first article 13. The shank portion 112 of the screw body 11 is then extended into the through hole 131 until the tip of the shank portion 112 abuts against the second article 14. Subsequently, with the use of a pneumatic tool (not shown) that engages the socket hole 121 of the anchoring ring 12 and the head portion 111 of the screw body 11, the screw body 11 and the anchoring ring 12 are rotated simultaneously in the same direction. As the shank portion 112 of the screw body 11 advances threadedly into the second article 14, the anchoring ring 12 initially abuts against the first article 13 at the periphery defining the through hole 131, and the screw thread 122 on the anchoring ring 12 eventually cuts into the surface of the first article 13 that defines the through hole 131. As such, the anchoring ring 12 and the screw body 11 engage the first and second articles 13, 14, respectively. Finally, the anchoring ring 12 is rotated in an opposite direction relative to the screw body 11 with the use of another tool (not shown). Rotation of the anchoring ring 12 in the opposite direction will result in a pulling force on the screw body 11 toward the first article 13, thereby pulling the second article 14 toward the first article 13. The first and second articles 13, 14 are fastened tightly to each other by the screw fastener 1 at this time.

Some of the drawbacks of the aforesaid conventional screw fastener 1 are as follows:
1. The outer wall surface of the anchoring ring 12 is formed with the flutes 123 that serve as a discharge path for wood shavings as the anchoring ring 12 is threaded into the first article 13. However, due to the presence of the flutes 123, parts of the anchoring ring 12 are unable to engage the first article 13, and the contact area between the outer wall surface of the anchoring ring 12 and the first article 13 is reduced. The binding strength between the anchoring ring 12 and the first article 13 is thus unsatisfactory.
2. Because the through hole 131, that is initially drilled through the first article 13, has a diameter smaller than the outer diameter of the anchoring ring 12, the surface of the first article 13 will crack at the periphery of the through hole 131 as the anchoring ring 12 is threaded into the first article 13.

Therefore, the object of the present invention is to provide a screw fastener of the above-mentioned type that is capable of overcoming the aforesaid drawbacks commonly associated with the prior art.

Accordingly, a screw fastener of this invention includes a screw body having an externally threaded shank portion, and a head portion on one end of the shank portion, and an anchoring ring coupled rotatably to the shank portion, and formed with a socket hole that receives the head portion of the screw body therein. The anchoring ring includes an externally threaded upper section, and a tapered lower section with an outer diameter that is gradually reduced in a direction away from the upper section.

Preferably, the upper section of the anchoring ring is formed with a continuous uninterrupted external screw thread.

In one embodiment, the tapered lower section of the anchoring ring has a smooth outer wall surface. In another embodiment, the tapered lower section is formed with a plurality of radial outward cutting ribs.

Other features and advantages of the present invention will become apparent in the following detailed description of the preferred embodiments with reference to the accompanying drawings, of which:
Figure 1 is a perspective partly cutaway view of a conventional screw fastener;
Figure 2 is a partly sectional schematic view of the conventional screw fastener in a state of use;
Figure 3 is a perspective partly cutaway view of the first preferred embodiment of a screw fastener according to the present invention;
Figures 4 and 5 are partly sectional schematic views illustrating how the first preferred embodiment is used to fasten two articles together; and
Figure 6 is a schematic view of the second preferred embodiment of a screw fastener according to the present invention in a state of use.

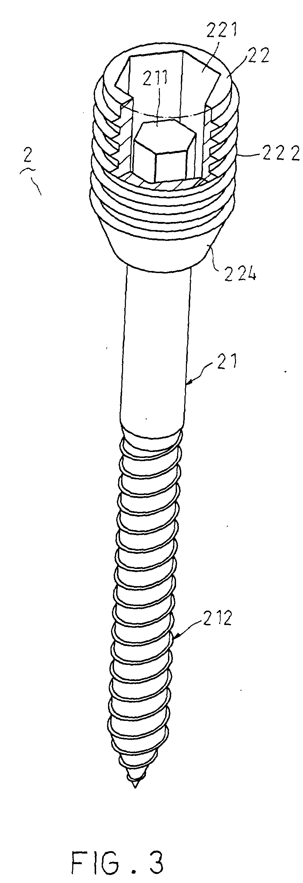

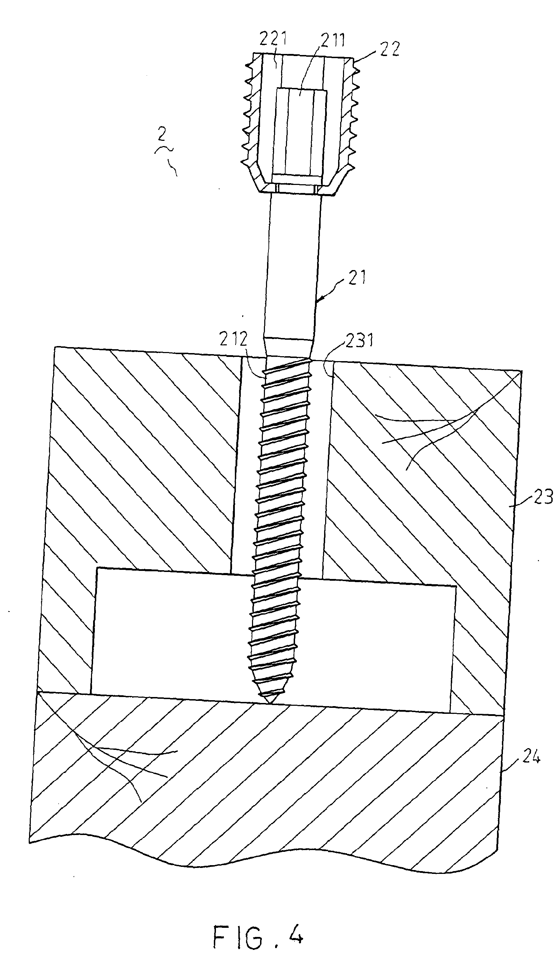

Referring to Figures 3 and 4, the first preferred embodiment of a screw fastener 2 according to this invention is shown to include a screw body 21 and an anchoring ring 22. The screw body 21 has an externally threaded shank portion 212 and a head portion 211 on one end of the shank portion 212. The head portion 211 has a polygonal cross-section. The anchoring ring 22 is coupled rotatably to the shank portion 212 via conventional tongue-and-groove means, and is formed with a socket hole 221 that has a polygonal cross-section and that receives the head portion 211 of the screw body 21 therein. The anchoring ring 22 includes an externally threaded upper section 222 formed with a continuous uninterrupted external screw thread, and a tapered lower section 224 with a smooth outer wall surface and an outer diameter that is gradually reduced in a direction away from the upper section 222.

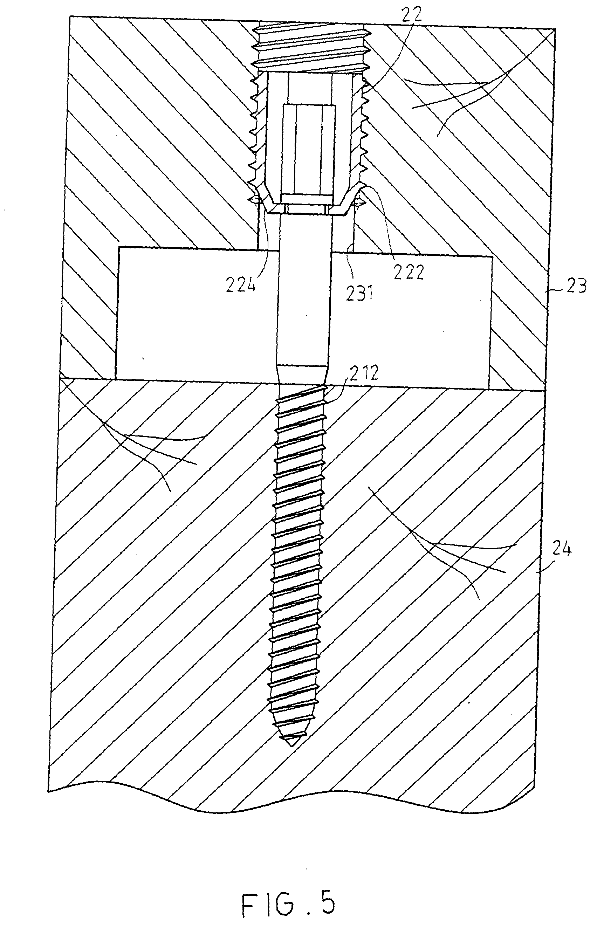

As shown in Figure 4, the screw fastener 2 is adapted to fasten together-first and second articles 23, 24 (such as wood members). In use, a through hole 231 having a diameter smaller than the outer diameter of the upper section 222 of the anchoring ring 22 is initially drilled through the first article 23. The shank portion 212 of the screw body 21 is then extended into the through hole 231 until the tip of the shank portion 212 abuts against the second article 24. Subsequently, with the use of a pneumatic tool (not shown) that engages the socket hole 221 of the anchoring ring 22 and the head portion 211 of the screw body 21, the screw body 21 and the anchoring ring 22 are rotated simultaneously in the same direction. With further reference to Figure 5, as the shank portion 212 of the screw body 21 advances threadedly into the second article 24, the tapered lower section 224 of the anchoring ring 22 will extend into the through hole 231 and guide the screw thread on the upper section 222 of the anchoring ring 22 to cut into the surface of the first article 23 that defines the through hole 231. As such, the anchoring ring 22 and the screw body 21 engage the first and second articles 23, 24, respectively. Finally, the anchoring ring 22 is rotated in an opposite direction relative to the screw body 21 with the use of another tool (not shown). Rotation of the anchoring ring 22 in the opposite direction will result in a pulling force on the screw body 21 toward the first article 23, thereby pulling the second article 24 toward the first article 23. The first and second articles 23, 24 are fastened tightly to each other by the screw fastener 2 at this time.

Because of the tapered design of the lower section 224 of the anchoring ring 22, the anchoring ring 22 is prevented from generating a very strong pressing force at the periphery of the through hole 231 during the instant the anchoring ring 22 is threaded into the first article 23, thereby minimizing the risk of cracking of the surface of the first article 23 at the periphery of the through hole 231. In addition, unlike the aforesaid conventional screw fastener, the screw thread on the upper section 222 of the anchoring ring 22 is not interrupted by flutes. Thus, the drawback of an unsatisfactory binding strength between the anchoring ring and the first article due to a relatively small contact area therebetween as encountered in the aforesaid conventional screw fastener can be overcome.

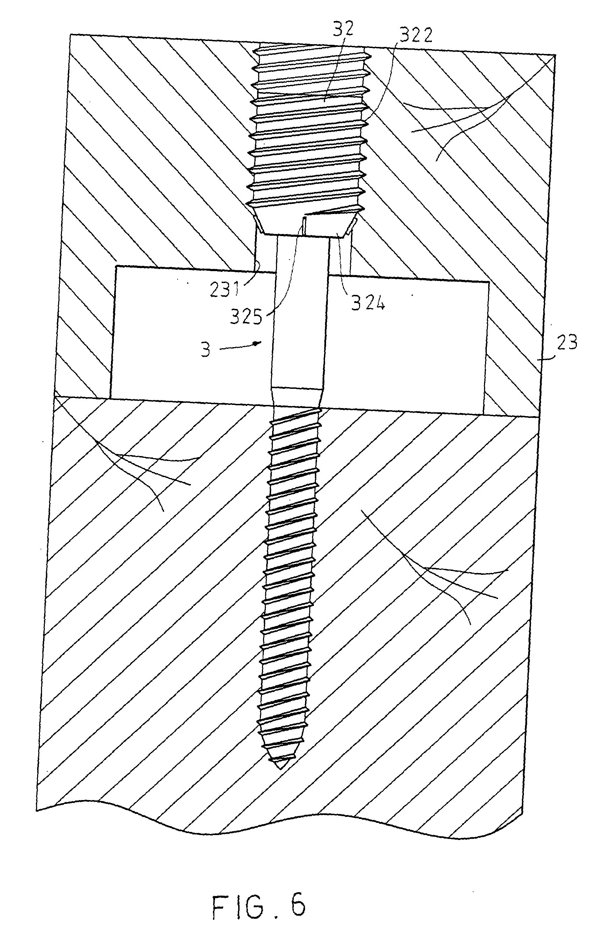

Figure 6 illustrates the second preferred embodiment of a screw fastener 3 according to the present invention. Unlike the previous embodiment, the tapered lower section 324 of the anchoring ring 32 is formed with a plurality of radial outward cutting ribs 325. Thus, as the anchoring ring 32 is threaded into the first article 23, the cutting ribs 325 cut the surface of the first article 23 that defines the through hole 231 before the screw thread on the upper section 322 of the anchoring ring 32 cuts into the same, thereby facilitating the driving of the anchoring ring 32 into the first article 23.

## Claims

1. A screw fastener (2, 3) including
a screw body (21) having an externally threaded shank portion (212), and a head portion (211) on one end of the shank portion (212), and
an anchoring ring (22, 32) coupled rotatably to the shank portion (212), and formed with a socket hole (221) that receives the head portion (211) of the screw body (21) therein,
**characterized in that** the anchoring ring (22, 32) includes an externally threaded upper section (222, 322), and a tapered lower section (224, 324) with an outer diameter that is gradually reduced in a direction away from the upper section (222, 322).

2. The screw fastener (2) of Claim 1, further **characterized in that** the tapered lower section (224) has a smooth outer wall surface.

3. The screw fastener (3) of Claim 1, further **characterized in that** the tapered lower section (324) is formed with a plurality of radial outward cutting ribs (325).

4. The screw fastener (2, 3) of any one of the preceding claims, further **characterized in that** the upper section (222, 322) of the anchoring ring (22, 32) is formed with a continuous uninterrupted external screw thread.
